# FASCICULE DE BREVET EUROPEEN

(11) **EP 0 470 918 B1**
(45) Date de publication et mention de la délivrance du brevet: **22.12.1993**
(21) Numéro de dépôt: 91470018.2
(22) Date de dépôt: 30.07.1991
(51) Int. Cl.: F16L 21/08

(54) **Joint entre éléments de tuyauterie**
Verbindung zwischen Rohrelementen
Pipe connection

(30) Priorité: 06.08.1990 FR 9010033
(43) Date de publication de la demande: 12.02.1992
(73) Titulaire: PONT-A-MOUSSON S.A., 54017 Nancy (FR)
(72) Inventeur: Percebois, Alain, F-54700 Blenod les Pont-à-Mousson (FR)
(74) Mandataire: Puit, Thierry

(56) Documents cités:
- DE-U- 8 311 636
- FR-A- 2 540 223
- FR-A- 2 621 376

## Description

La présente invention est relative au verrouillage des joints de tuyauterie. Elle s'applique en particulier au verrouillage des joints dits automatiques, c'est-à-dire dans lesquels un bout mâle est introduit dans un emboîtement en comprimant radialement une garniture d'étanchéité logée dans ce dernier. Dans ce cas, l'étanchéité est obtenue indépendamment du verrouillage, lequel est seulement destiné à éviter le déboîtement des joints lorsque la tuyauterie véhicule des fluides sous pression élevée.

Toutefois, l'invention peut également s'appliquer au verrouillage des joints dits mécaniques, c'est-à-dire dans lesquels l'étanchéité est obtenue en même temps que le verrouillage par compression axiale d'une garniture d'étanchéité.

On connait par le document DE-U-8311636 un joint verrouillé entre un tuyau à bout mâle et un tuyau à emboîtement où une contre-bride de verrouillage est serrée sur l'emboîtement par l'intermédiaire de coins insérés entre ladite contre-bride et l'emboîtement, faisant ainsi office de cales. L'inconvénient de ce système est qu'il nécessite un ajustement précis des contours internes de la contre-bride aux contours externes des coins, et rend le positionnement de ces coins difficile, à fortiori lorsque leur montage doit s'effectuer dans un environnement peu confortable tel que par exemple au fond d'une tranchée de dimensions réduites.

On connait également, par le document FR-A-2540223, un joint verrouillé selon lequel le dispositif de verrouillage ne s'applique qu'aux tuyaux de grands diamètres, et se présente sous la forme de plusieurs segments annulaires de verrouillage qui prennent appui directement derrière l'emboîtement et son reliés par l'intermédiaire de boulons à une bride folle entourant le bout mâle.

L'invention a pour but de fournir une technique fiable et économique de verrouillage des joints de tuyauterie.

A cet effet, l'invention a pour objet un joint verrouillé entre éléments de tuyauterie du type comprenant une collerette rapportée destinée a être mise en place sur un relief d'extrémité de forme conjuguée de l'un desdits éléments et à servir d'appui à un dispositif de verrouillage du joint, caractérisé en ce que la collerette rapportée présente sur au moins une partie de sa périphérie une demi-section méridienne en L, la concavité du L étant tournée radialement vers l'intérieur, et présente sur son côté convexe extérieur une surface d'appui inclinée sur laquelle viennent pendre appui, en position de verrouillage, des organes d'appui du dispositif de verrouillage.

Suivant d'autres caractéristiques de l'invention :
- les branches du L sont orientées respectivement radialement et parallèlement à l'axe de la collerette ;
- la surface d'appui inclinée s'étend, vers l'axe de la collerette, jusqu'en regard de la branche radiale du L ;
- la branche radiale du L se termine par une surface cylindrique intérieure ;
- la forme intérieure de la collerette est conjuguée de la forme extérieure du relief d'extrémité de l'élément de tuyauterie sur lequel la collerette est mise en place ;

Ledit relief d'extrémité peut notamment être un emboîtement et l'ensemble comprendre en outre une garniture d'étanchéité adaptée pour être positionnée dans l'emboîtement, et un bout mâle d'un second élément de tuyauterie adapté pour être introduit dans l'emboîtement en comprimant radialement la garniture, ce bout mâle portant des moyens d'appui adaptés pour coopérer avec le dispositif de verrouillage. Dans un mode de réalisation d'un tel joint, les moyens d'appui comprennent un jonc enfilé sur le bout mâle et un cordon de soudure déposé sur ce bout mâle, et/ou la garniture est du type à inserts de verrouillage.

Des exemples de réalisation de l'invention vont maintenant être décrits en regard des dessins annexés, sur lesquels :
- la figure 1 est une demi-vue en coupe longitudinale d'un joint pour tuyauterie conforme à l'invention ;
- la figure 2 est une vue de dessus de la collerette de ce joint, à l'état libre ;
- la figure 3 est une vue de face d'une variante de cette collerette ; et
- la figure 4 représente une autre variante de la collerette suivant l'invention.

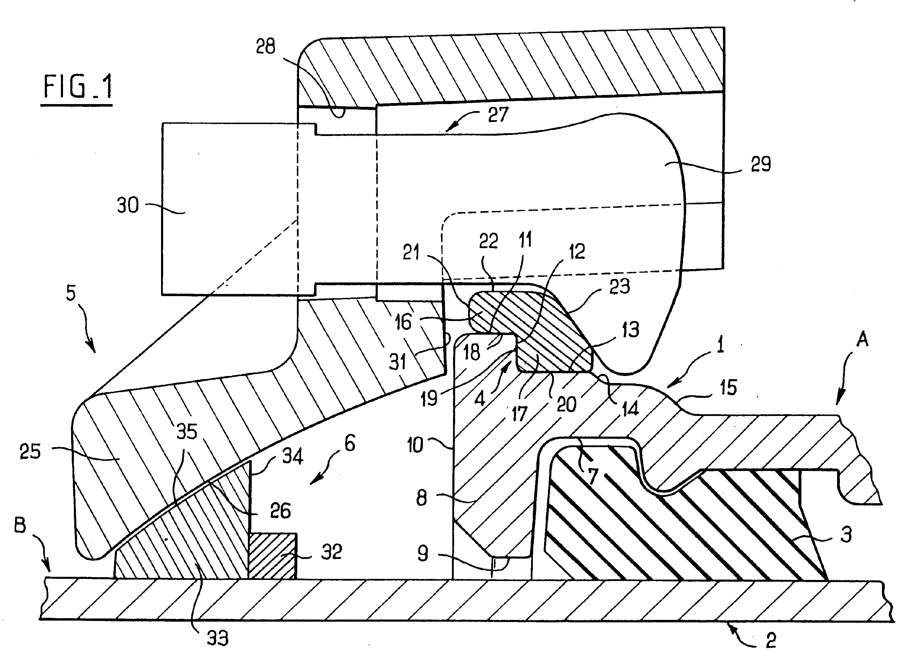

La figure 1 représente un joint automatique verrouillé réalisé entre un emboîtement 1 constituant un relief d'extrémité d'un premier élément de tuyauterie A, qui est par exemple un raccord ou un tuyau, et le bout mâle 2 à surface extérieure cylindrique d'un second élément de tuyauterie B constitué par un tuyau. Les éléments A et B sont par exemple en fonte et réalisés par centrifugation. Le joint comprend encore une garniture 3 à compression radiale, une collerette rapportée 4, un dispositif de verrouillage 5, et des moyens 6 par lesquels le dispositif 5 prend appui sur le bout mâle.

L'emboîtement 1 comprend intérieurement un logement 7 pour la garniture 3 et est délimité, à son extrémité, par une paroi radiale intérieure 8. Cette dernière définit un orifice d'entrée 9 de l'emboîtement qui permet au bout mâle 2 de pénétrer avec un jeu radial notable dans l'emboîtement pour comprimer radialement la garniture 3 et assurer ainsi l'étanchéité du joint, comme représenté à la figure 1. La paroi 8 définit également une tranche d'extrémité plane 10 de l'emboîtement.

Extérieurement, l'emboîtement présente successivement, à partir de la tranche d'extrémité 10, une surface cylindrique 11 de grand diamètre, une surface radiale 12, une surface cylindrique 13 de petit diamètre, un décrochement 14 vers l'axe du joint, et une surface courbe 15 de diamètre progressivement décroissant.

La collerette 4 est un anneau fendu dont la demi-section méridienne est constante et visible sur la figure 1. Cette demi-section a une forme générale en L, avec une branche 16 parallèle à l'axe du joint et une branche radiale 17. Cette collerette définit ainsi intérieurement une surface cylindrique 18 de grand diamètre, une surface radiale 19 et une surface cylindrique 20 de petit diamètre, l'ensemble de ces trois surfaces formant un S conjugué de celui formé par les surfaces 11 à 13 de l'emboîtement. La collerette est délimitée vers l'avant par une tranche d'extrémité plane 21 se raccordant à la surface 18, et extérieurement par une surface cylindrique 22 partant de la surface 21 et par une surface tronconique arrière 23 s'étendant de la surface 22 à la surface 20. Les raccordements entre les surfaces 18 et 21, 21 et 22, 22 et 23, 23 et 20 sont arrondis.

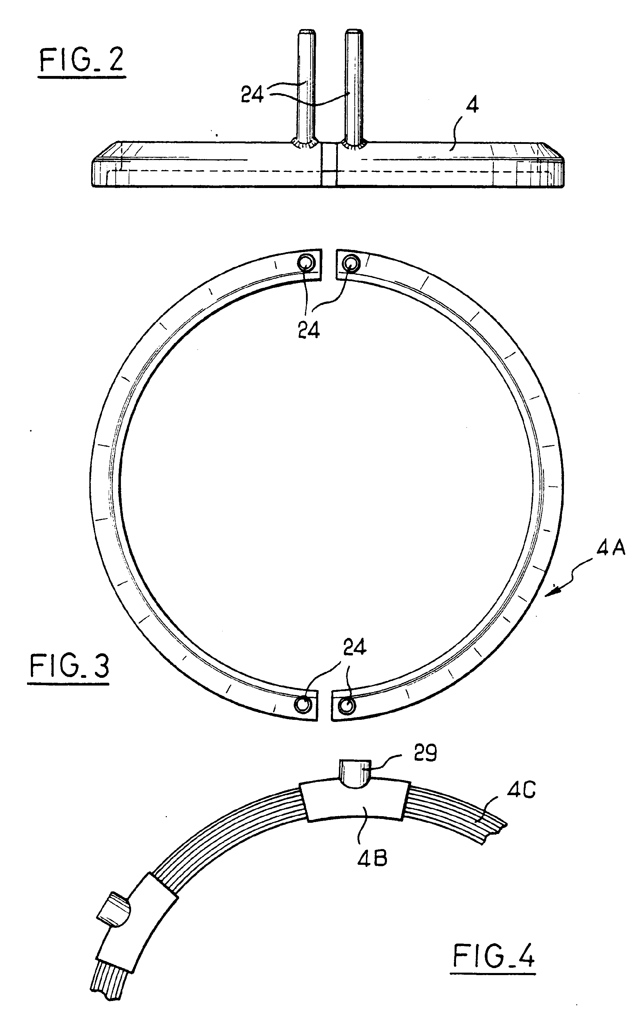

Comme on le voit sur la figure 2, une broche axiale 24 est fixée à chaque extrémité de la collerette 4, sur sa face arrière. Lorsque la collerette a été mise en place sur l'emboîtement 1 à la manière d'un circlips, ces deux broches sont réunies par un lien tel qu'un bracelet élastique (non représenté).

Le dispositif de verrouillage 5 comprend une bride annulaire 25, en une ou plusieurs parties, à surface intérieure sphérique 26, et une série d'organes d'appui 27 traversant chacun un orifice axial 28 prévu à la périphérie de cette bride. Chaque organe 27 comprend une tige dont une extrémité comporte un bourrelet excentrique 29 et l'autre extrémité un filetage 30 sur lequel vient se visser un écrou (non représenté). La bride 25 présente une tranche d'extrémité plane 31 du côté de l'emboîtement 1.

Les moyens d'appui 6 comprennent d'une part un cordon de soudure circulaire 32, en une ou plusieurs parties, déposé sur le bout mâle 2 et situé à l'extérieur de l'emboîtement lorsque le joint est assemblé, et d'autre part un jonc fendu 33 enfilé sur le bout mâle. Ce jonc comporte du côté de l'emboîtement une face plane 34 d'appui sur le cordon 32, et de l'autre côté une surface sphérique 35 conjuguée de la surface 26 de la bride 25.

Pour réaliser le joint verrouillé de la figure 1, on commence par enfiler le dispositif 5 et le jonc 33 sur le bout mâle, au-delà du cordon de soudure 32, et l'on met en place la collerette 4 sur l'emboîtement, ce qui positionne la surface 21 de la collerette en retrait par rapport à la tranche d'extrémité 10 de l'emboîtement. On introduit ensuite le bout mâle dans l'emboîtement, de sorte que les deux éléments de tuyauterie prennent leurs positions définitives.

Pour verrouiller le joint ainsi obtenu, on enfile les organes 27 dans les orifices 28 après les avoir fait tourner de 90° par rapport à la position représentée à la figure 1, ce qui permet au bourrelet 29 de franchir la collerette 4.

Puis on fait tourner les organes 27, ce qui les amène dans leur position de verrouillage représentée. Ensuite, on visse les écrous sur les filetages 30, ce qui amène la surface d'appui inclinée 36 de chaque bourrelet 29 au contact de la surface conjuguée 23 de la collerette, sur toute la longueur axiale de celle-ci, la surface 26 de la bride 25 venant en même temps en appui contre la surface 35 et la surface 34 du jonc 33 venant en outre en appui contre le cordon de soudure 32. Ceci assure le verrouillage du joint et empêche son déboîtement sous l'effet des efforts axiaux qui se développent lorsque la tuyauterie véhicule un fluide sous pression.

L'utilisation de la collerette rapportée 4 présente plusieurs avantages :
- l'emboîtement 1 est moins massif que s'il devait porter lui-même la surface d'appui 23, ce qui réduit les problèmes de retassures dans la fonte lors de sa centrifugation ;
- grâce à la forme de la collerette décrite plus haut, l'effort de verrouillage est efficacement transmis à l'emboîtement sans risque de basculement de la collerette ;
- on peut choisir pour la collerette le matériau le plus approprié, par exemple de la fonte, de l'acier ou même, pour les pressions modérées, une matière plastique, assurant ainsi l'isolation électrique des tronçons successifs de tuyauterie ;
- on peut fabriquer des éléments de tuyauterie A identiques pour constituer les joints destinés à être verrouillés et ceux non destinés à être verrouillés. On fait ainsi une importante économie de fonte sur l'ensemble de la production.

En variante, comme représenté sur la figure 3, la collerette 4A peut être constituée de deux moitiés munies chacune, à chaque extrémité, d'une broche 24, ces broches étant reliées deux à deux, par exemple par un bracelet élastique, lorsque la collerette est en place sur l'emboîtement. Cette variante convient en particulier pour les petits diamètres de tuyauteries, par exemple inférieurs à 200 mm.

En variante encore (figure 4), la collerette peut être constituée d'un certain nombre de secteurs 4B reliés par des éléments souples tels que des caoutchoucs de liaison 4C.

La garniture 3 peut être du type à inserts de verrouillage, par exemple telle que décrite dans le FR-A-2 621 376 au nom de la Demanderesse.

## Revendications

1. Joint verrouillé entre éléments de tuyauterie (A ; B) du type comprenant une collerette rapportée (4 ; 4A ; 4B, 4C) destinée à être mise en place sur un relief d'extrémité (1) de forme conjuguée de l'un (A) desdits éléments et à servir d'appui à un dispositif (5) de verrouillage du joint, caractérisé en ce que la collerette rapportée (4; 4A ; 4B, 4C) présente sur au moins une partie de sa périphérie une demi-section méridienne en L, la concavité du L étant tournée radialement vers l'intérieur, et présente sur son côté convexe extérieur une surface d'appui inclinée (23) sur laquelle viennent prendre appui, en position de verrouillage, des organes d'appui (27) du dispositif (5) de verrouillage.

2. Joint verrouillé suivant la revendication 1, caractérisé en ce que les branches (16, 17) du L de la collerette (4 ; 4A ; 4B, 4C) sont orientées respectivement radialement et parallèlement à l'axe de la collerette.

3. Joint verrouillé suivant la revendication 2, caractérisé en ce que la surface d'appui inclinée (23) de la collerette (4 ; 4A ; 4B, 4C) s'étend, vers l'axe de celle-ci, jusqu'en regard de la branche radiale (17) du L.

4. Joint verrouillé suivant la revendication 2 ou 3, caractérisé en ce que la branche radiale (17) du L de la collerette (4 ; 4A ; 4B, 4C) se termine par une surface cylindrique intérieure (20).

5. Joint verrouillé suivant l'une quelconque des revendications 1 à 4, caractérisé en ce que la forme intérieure (18 à 20) de la collerette (4 ; 4A ; 4B) est conjuguée de la forme extérieure (11 à 13) du relief d'extrémité (1) de l'élément de tuyauterie (A) sur lequel ladite collerette est mise en place.

6. Joint verrouillé suivant l'une quelconque des revendications 1 à 5, dans lequel ledit relief d'extrémité (1) est un emboîtement, et comprenant en outre une garniture d'étanchéité (3) adaptée pour être positionnée dans l'emboîtement, et un bout mâle (2) d'un second élément de tuyauterie (B) adapté pour être introduit dans l'emboîtement en comprimant radialement la garniture, ce bout mâle portant des moyens d'appui (6) adaptés pour coopérer avec le dispositif de verrouillage (5).

7. Joint verrouillé suivant la revendication 6, caractérisé en ce que les moyens d'appui (6) comprennent un jonc (33) enfilé sur le bout mâle (2) et un cordon de soudure (32) déposé sur ce bout mâle.

8. Joint verrouillé suivant la revendication 6 ou 7, caractérisé en ce que la garniture est du type à inserts de verrouillage.

## Patentansprüche

1. Gesicherte Verbindung zwischen Rohrelementen (A; B) mit einem zusammengesetzten Flansch (4; 4A; 4B, 4C), der auf einem Endstück (1) angebracht wird, das komplementär zu einem der Elemente geformt ist und als Auflagefläche für eine Sicherungsvorrichtung (5) der Verbindung dient, dadurch gekennzeichnet, daß der zusammengesetzte Flansch (4; 4A; 4B; 4C;) auf mindenstens einem Teil seines Umfangs einen L-förmigen halben meridianen Querschnitt aufweist, wobei die Konkavität des L radial nach innen gerichtet ist, und auf seiner Außenseite eine schräge Auflagefläche (23) aufweist, auf welche in der gesicherteren Stellung Stützorgane (27) der Sicherungsvorrichtung (5) zur Auflage kommen.

2. Gesicherte Verbindung nach Anspruch 1, dadurch gekennzeichnet, daß die Arme (16, 17) des L des, Flansches (4; 4A; 4B; 4C;) radial, bzw. parallel zur Achse des Flansches gerichtet sind.

3. Gesicherte Verbindung nach Anspruch 2, dadurch gekennzeichnet, daß sich die Auflagefläche (23) des Flansches (4; 4A; 4B; 4C;) in Richtung der Flanschachse bis zur Höhe des radialen Arms (17) des L erstreckt;

4. Gesicherte Verbindung nach Anspruch 2 oder 3, dadurch gekennzeichnet, daß der radiale Arm (17) des L des Flansches (4; 4A; 4B; 4C) in einer zylindrischen Innenfläche (20) endet;

5. Gesicherte Verbindung nach einem der Ansprüche 1 bis 4, dadurch gekennzeichnet, daß die innere Form (18 bis 20) des Flansches (4; 4A; 4B; 4C) komplementär zu der äußeren Form (11 bis 13) des Endstücks (1) des Rohrelements (A) geformt ist, auf welchem der Flansch angebracht ist.

6. Gesicherte Verbindung nach einem der Ansprüche 1 bis 5, bei welcher das Endstück (1) eine Muffe ist, und die zudem eine Dichtung (3), die so ausgebildet ist, daß sie in die Muffe eingesetzt werden kann, sowie ein Einsteckende (2) eines zweiten Rohrelements (B) enthält, das unter radialem Pressen der Dichtung in die Muffe eingesetzt werden kann, wobei dieses Einsteckende Stützorgane (6) trägt, die mit der Sicherungsvorrichtung (5) zusammenwirken.

7. Gesicherte Verbindung nach Anspruch 6, dadurch gekennzeichnet, daß die Stützorgane (6) einen auf das Einsteckende (2) aufgesetzten Haltering (33) und eine auf diesem Einsteckende angebrachte Schweißnaht (32) aufweisen.

8. Gesicherte Verbindung nach Anspruch 6 oder 7, dadurch gekennzeichnet, daß die Dichtung Gewindeeinsätze für die Sicherung enthält.

## Claims

1. Locked joint between pipe sections (A; B), of the type comprising an attached collar (4; 4A; 4B, 4C) intended to be placed on an end bulge (1) having a shape conjugate with one (A) of said sections and to serve as support to a locking device (5) of the joint, characterized in that the attached collar (4; 4A; 4B, 4C) has on at least one part of its periphery an L-shaped meridian half section, the concavity of the L facing radially inwards, and has on its outer convex side an inclined support surface (23) on which there come to bear, in the locked position, support members (27) of the locking device (5).

2. Locked joint according to Claim 1, characterized in that the branches (16, 17) of the L of the collar (4: 4A; 4B, 4C) are oriented respectively radially and parallel to the axis of the collar.

3. Locked joint according to Claim 3, characterized in that the inclined support surface (23) of the collar (4; 4A: 4B, 4C) extends towards the axis of the latter as far as opposite the radial branch (17) of the L.

4. Locked joint according to Claim 2 or 3, characterized in that the radial branch (17) of the L of the collar (4; 4A; 4B, 4C) is terminated by an internal cylindrical surface (20).

5. Locked joint according to any one of Claims 1 to 4, characterized in that the internal shape (18 to 20) of the collar (4; 4A; 4B) is conjugate with the external shape (11 to 13) of the end bulge (1) of the pipe section (A) on which said collar is placed.

6. Locked joint according to any one of Claims 1 to 5, in which said end bulge (1) is a socket, and further comprising packing material (3) adapted to be arranged in the socket, and a male end (2) of a second pipe section (B) adapted to be inserted into the socket while radially compressing the packing material, this male end carrying support means (6) adapted to cooperate with the locking device (5).

7. Locked joint according to Claim 6, characterized in that the support means (6) comprise a ring (33) threaded onto the male end (2) and a welded seam (32) arranged on this male end.

8. Locked joint according to Claim 6 or 7, characterized in that the packing material is of the type having locking inserts.
